# EUROPEAN PATENT SPECIFICATION

(11) **EP 1 710 992 B1**
(45) Date of publication and mention of the grant of the patent: **26.09.2018**
(21) Application number: 06007386.3
(22) Date of filing: 07.04.2006
(51) Int. Cl.: H04M 1/725, H04M 1/2745

(54) **Method for call origination using short key in mobile communication terminal and mobile communication terminal implementing the same**
Verfahren zum Aufbau einer Verbindung mittels Abkürzungstasten in einem Mobilendgerät
Procédé d'établissement d'appel en utilisant des touches de raccourci dans un dispositif mobile

(30) Priority: 08.04.2005 KR 20050029627
(43) Date of publication of application: 11.10.2006
(73) Proprietor: Samsung Electronics Co., Ltd., Suwon-si, Gyeonggi-do, 443-742 (KR)
(72) Inventor: Kim, Eun-Sun, Yeongtong-gu Suwon-si Gyeonggi-do (KR); Yoo, Wi-Hyun, Yeongtong-gu Suwon-si Gyeonggi-do (KR); Choi, Seung-Chul, Yeongtong-gu Suwon-si Gyeonggi-do (KR)
(74) Representative: Nederlandsch Octrooibureau

(56) References cited:
- GB-A- 2 321 824
- US-B1- 6 424 711
- US-B1- 6 781 575

## Description

### BACKGROUND OF THE INVENTION

### 1. Field of the Invention

The present invention relates to a mobile communication terminal. More particularly, the present invention relates to a method and a mobile communication terminal for call origination using a short key.

### 2. Description of the Related Art

In a call origination using a short key in a conventional mobile communication terminal, an order is sequentially set according to an input order of phone numbers during the receipt of the phone numbers in a phone book from a user. A number of the corresponding order is set as a short key. Accordingly, when a user does not remember a short key corresponding to a phone number stored in the phone book and originates a call, the user must search for the corresponding phone number by a name, or a portion of the phone number in the phone book. Further, since a user directly sets a short key, when a phone number has been previously registered in a corresponding address to be set, the user must delete the previously stored phone number and set a new phone number, which the user will register, in the address. In the conventional phone book, a plurality of phone numbers may be input to one address. The address represents a sequentially set number when a user inputs phone numbers. For example, when a person (registrant) who wants to register something in a phone book stores the phone numbers of a home, company, mobile communication terminal, and the like of the registrant, the person must register all phone numbers in one address by the name of the registrant, or register the phone numbers in different addresses, respectively, although the person is the same registrant. When the phone numbers are stored in one address, as described above, a phone number registered in the uppermost position is recognized as a phone number corresponding to a short key. Accordingly, when a user originates a call to a phone number other than the phone number stored as the short key, the user must search for the phone number from a phone book and originate the call.

When a terminal equipped with a Subscriber Identification Mobile (SIM) card for storing personal information, such as, a Global System for Mobile Communication (GSM) terminal, multiple phone numbers have been registered in the number of the same address because separate registration addresses exist for both phone numbers stored in the internal memory of the terminal and phone numbers stored in the SIM card. Therefore, setting short keys for the phone numbers stored in the internal memory of the terminal is not difficult. However, setting short keys for the phone numbers stored in the SIM card is difficult.

US6781575B1 discloses an apparatus for enabling user-configurable access to actionable addresses in a computer system, the method comprising displaying a first of a plurality of action pages on the screen, each action page having a plurality of activatable elements in a pre-defined layout comprising a plurality of editable positions on said screen, each activatable element may be assigned correspondence with a user defined label displayed with the activatable element and a user defined actionable address.

GB2321824A discloses a method of transferring a phone number already stored in a phone number database of a phone from a memory location without speed dialling facility to a memory location with speed dialling facility, without this causing loss of information already saved. D2 relates to a phone for performing the method.

US6424711 discloses a telecommunications system that provides for telephone functions to be accessed through client computer system. A server computer system producing telephony services, database services and access to e-mail, voice mail, video conferencing and facsimile systems. A graphical user interface is presented to a user to allow the user to perform a large number of functions and access to databases of information associated with calling and called parties.

### SUMMARY OF THE INVENTION

The invention is set out in the appended set of claims. The embodiments and/or examples of the following description which are not covered by the appended claims are considered as not being part of the present invention.

An aspect of exemplary embodiments of the present invention is to address at least the above problems and/or disadvantages and to provide at least the advantages described below. Accordingly, an aspect of exemplary embodiments of the present invention is to provide a convenience of call an origination using a short key by allowing the short key to be registered at the user's convenience when a call is originated by means of the short key from a user.

In accordance with certain aspects of exemplary embodiments of the present invention, there is provided a call origination method using a short key, and a mobile communication terminal, where a short key setup menu is received, one of multiple numbers is received, for which short keys are set according to the short key setup menu, a phone number of a phone book is received, which corresponds to the received number, and the number as a short key is set. When the number set as the short key is input by a user, a call to a phone number corresponding to the number is originated.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIG. 1 is a block diagram illustrating the construction of a mobile communication terminal applied to an exemplary embodiment the present invention;
FIG. 2 is a flow diagram illustrating a short key registration operation according to an exemplary embodiment of the present invention;
FIG. 3 is a flow diagram illustrating a call origination operation using a short key in a mobile communication terminal according to an exemplary embodiment of the present invention;
FIG. 4 is a flow diagram illustrating a call origination operation using a short key in a mobile communication terminal according to an exemplary embodiment of the present invention; and
FIGs. 5A and 5B are diagrams illustrating a screen displayed when a short key is registered according to an exemplary embodiment of the present invention.

Throughout the drawings, the same reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the claims. Also, descriptions of well-known functions and constructions are omitted for clarity and conciseness.

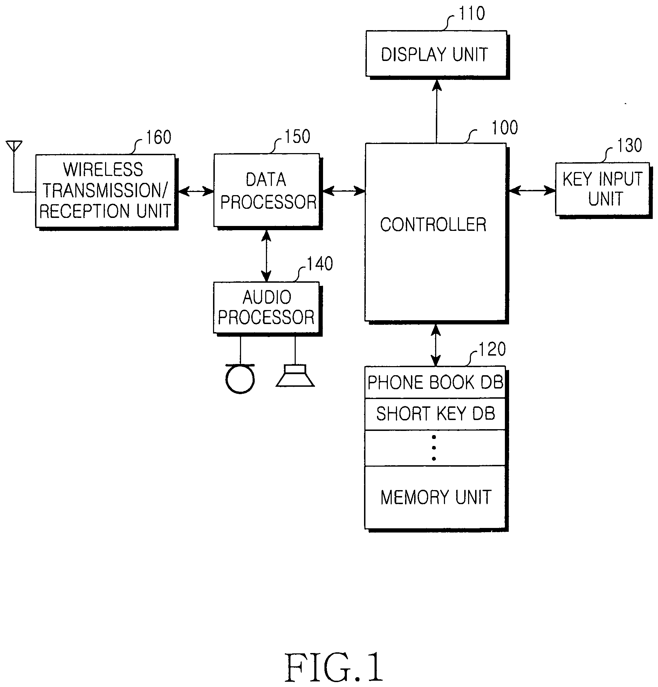

FIG. 1 is a block diagram illustrating the construction of a mobile communication terminal applied to an exemplary embodiment of the present invention. Referring to FIG. 1, a controller 100 controls the general operations of the mobile communication terminal. In an exemplary implementation, when the controller 100 determines that a short key setup menu has been received from a user, the controller 100 can set a phone number as a short key, which is selected by the user from phone numbers previously registered in a phone book. Further, when the user presses a short key, that is a number key, the controller 100 determines if a phone number corresponding to the short key exists, or if a phone number exists in an address corresponding to the number previously set in the phone book. According to the determination results, the controller 100 controls a call to be originated to one of the phone numbers. When one of the phone numbers does not exist, the controller 100 determines an existing phone number and controls a call to be originated to the existing phone number.

A display unit 110 displays the current state, and each processing and operation state according to the key input from a key input unit 130. In an exemplary implementation, when the short key setup menu is received from the user, the display unit 110 displays the arrangement screen of number keys in the key input unit 130. Accordingly, when the user sets a short key, the display unit 110 displays whether the short key has been set so that existence or absence of a phone number previously set in a number to be set by the user can be determined. Further, if the user presses a number key, when there exist both the phone number of a short key corresponding to the number of the number key and a phone number corresponding to an address of the phone book, the display unit 110 displays all of the existing phone numbers. If the display unit 110 receives the short key setup menu from the user and displays the arrangement screen of the number keys, when a number key of a number which a short key has been set is received from the user, the display unit 110 displays both the phone number set as the short key and various information.

A memory 120 stores programs executed by the controller 100 or temporarily stores data processed by programs. The memory 120 stores various ringing sound, MP3 files, dynamic images, and the like, which may be output from the mobile communication terminal. The memory 120 also stores data of various phone books, messages, and the like. Further, the memory 120 includes a Read-Only Memory (ROM), Electrically Erasable Programmable Read-Only Memory (EEPROM), Random Access Memory (RAM), and the like. The memory 120, according to an exemplary embodiment of the present invention, includes a phone book database and a short key database. The phone book database sequentially stores phone numbers input by the user. Accordingly, when the order of the phone numbers stored in the phone book database is not randomly set by the user, addresses are set and stored according to an input order. The short key database receives the short key setup menu from the user, receives a number of a number key to be designated as the short key, and stores short keys set separately from the order of the phone book.

The key input unit 130 is used when the user inputs both various data stored in the mobile communication terminal and signals used for performing various functions in the mobile communication terminal. For example, the key input unit 130 according to an exemplary embodiment of the present invention is used when the numbers of the number keys of the key input unit 130 are set as short keys by the user and phone numbers are received so as to correspond to the numbers of the number keys. Further, in the case in which the user presses a number key, when both the phone number corresponding to the number of the number key and the phone number stored in the phone book exist, the key input unit 130 is used when the user selects one of the phone numbers displayed on the display unit 110. An audio processor 140 includes a vocoder, which is operated under the control of the controller 100. The audio processor 140 converts coded voice data received from a wireless transmission/reception unit 160 into electrical voice signals through decoding, and outputs the electrical voice signals to a speaker. Then, the speaker converts the received electrical voice signals into audible sound and outputs the audible sound. Further, the audio processor 140 encodes electrical voice signals received from a microphone and outputs the encoded voice signals to the wireless transmission/reception unit 160. When a call is terminated, the audio processor 140 outputs various ringing sound stored in the memory 120 through the speaker. When frequency signals on a wireless channel of a frequency band are received through an antenna under the control of the controller 100, the wireless transmission/reception unit 160 down-converts the frequency of the received signals, classifies the data type, and outputs the classified data to the controller 100. The data output from the wireless transmission/reception unit 160 to the controller 100 include character data or paging signals received through a paging channel and signaling signals. The wireless transmission/reception unit 160, according to an exemplary embodiment of the present invention, originates a call to at least one of a phone number, which has designated a number corresponding to a number key input by the user as a short key, and a phone number in which an address is set to the number and stored in the phone book.

In the construction of the mobile communication terminal applied to an exemplary embodiment of the present invention as described above, the memory includes both the phone book database for sequentially storing phone numbers input by the user and the short key database for storing separate short keys received according to a user setup from among the phone numbers previously stored in the phone book. Further, the mobile communication terminal includes the display unit for displaying the arrangement screen of the number keys in the key input unit when the short key setup menu is received from the user. In an exemplary implementation, the mobile communication terminal includes the key input unit, which a number according to the arrangement of the number keys displayed on the display unit is input and a phone number previously stored in the phone book is selected so as to correspond to the input number that is set as a short key.

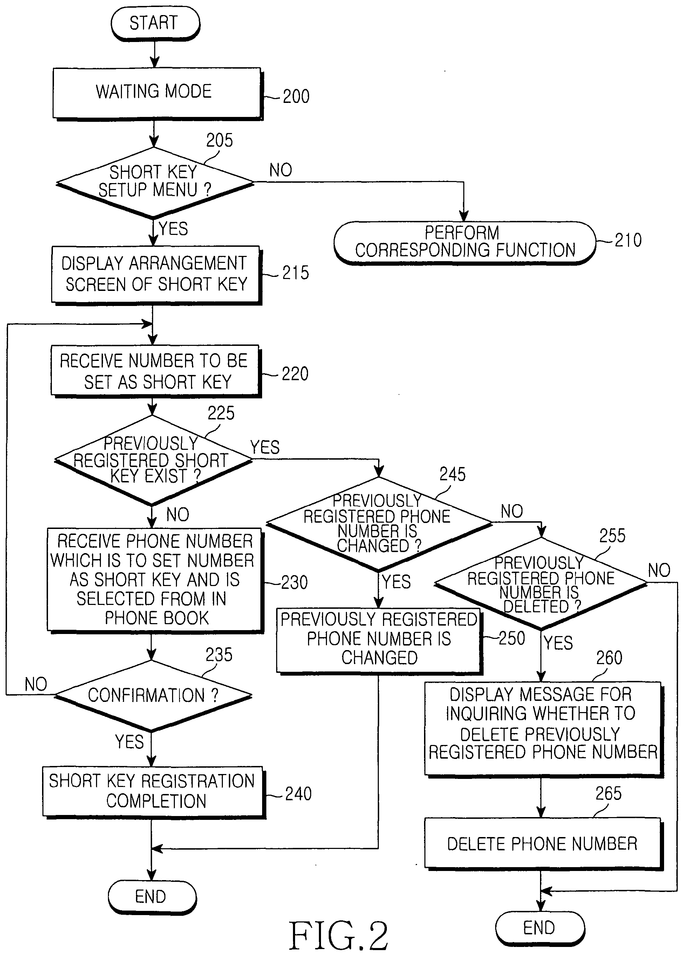

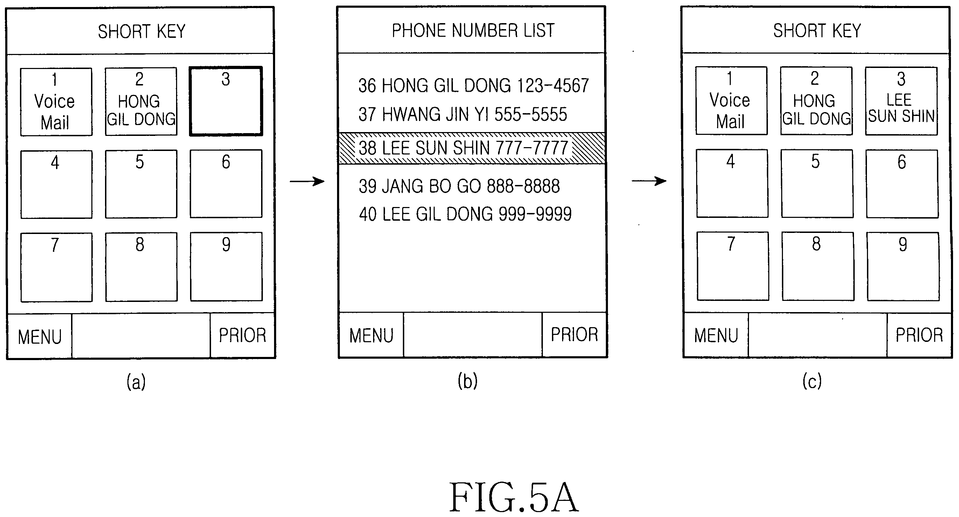

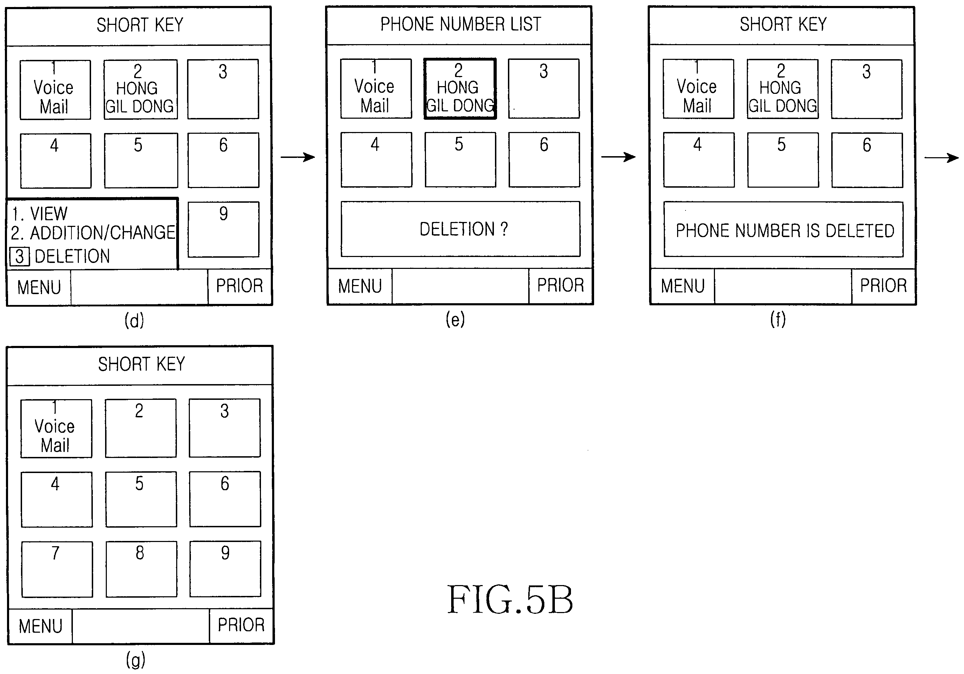

FIG. 2 is a flow diagram illustrating a short key registration operation according to an exemplary embodiment of the present invention, and FIGs. 5A and 5B are diagrams illustrating a screen displayed when a short key is registered according to an exemplary embodiment of the present invention. Referring to FIGs. 2 to 5B, the mobile communication terminal is in a waiting mode in step 200. When a predetermined key is input from a user in the waiting mode, the controller 100 determines if the input key is a short key setup key in step 205. As a result of the determination, when the input key is not the short key setup key, the controller 100 controls a function corresponding to the input key to be performed in step 210. However, when the input key is the short key setup key, the controller 100 controls the arrangement screen of the number keys in the key input unit 130 to be displayed on the display unit 110 as illustrated in (a) of FIG. 5A, in step 215. When the arrangement screen of the number keys is displayed, a number for which a short key has not been set is first selected from among numbers corresponding to the number keys.

In step 220, the controller 100 receives a number, which is to be set as a short key among the displayed number keys, from the user. In step 225, the controller 100 determines if a previously registered short key corresponding to the received number exists. As a result of the determination, when the previously registered short key does not exist, the controller 100 receives a phone number to set the number as a short key and is selected from the phone numbers previously stored in the phone book, in step 230. When a confirmation key for registering the received phone number as a phone number corresponding to the number is input in step 235, the controller 100 displays a message for reporting that the phone number is set to correspond to the number, and the number is set as the short key, in step 240.

As a result of the determination in step 225, when the previously registered short key corresponding to the received number exists, the controller 100 sets the number as a short key and determines if a key for changing the previously registered phone number is input, in step 245. As a result of the determination, when the key is input, the controller 100 changes the previously stored phone number into one of multiple phone numbers previously stored in the phone book, and stores the changed phone number, in step 250. As a result of the determination in step 245, when the key is not input, the controller 100 sets the number as a short key and determines if a key for deleting the previously registered phone number is input, in step 255. As a result of the determination, when the key is input, the controller 100 controls a message for inquiring whether to delete the previously registered phone number to be displayed on the display unit 110 as illustrated in (e) of FIG. 5B, in step 260. Accordingly, when a confirmation key for deleting the phone number is input from the user, the controller 100 then deletes the phone number in step 265 and controls a message for reporting the deletion of the phone number to be displayed on the display unit 110 as illustrated in (f) of FIG. 5B. The controller 100 then deletes the phone number set as the short key in the short key database, and controls a screen to be displayed on the display unit 110 as illustrated in (g) of FIG. 5B.

In the short key registration operation according to an exemplary embodiment of the present invention as described above, the short key setup menu is received from the user and displayed on the display unit similarly to the arrangement screen of the number keys in the key input unit. Accordingly, the user selects one of the numbers of the displayed number keys, selects one of the phone numbers previously registered in the phone book, and sets the selected phone number as a phone number employing the selected number as a short key. Further, when the previously set phone number exists in the input number, the controller determines if a key for changing or deleting the phone number is input, and controls a function corresponding to the input key to be performed.

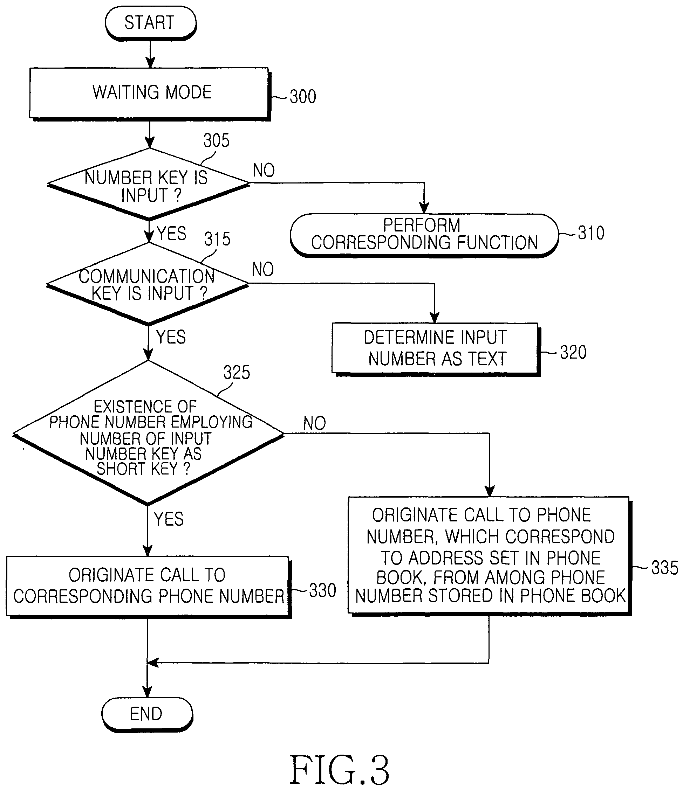

FIG. 3 is a flow diagram illustrating a call origination operation using a short key in the mobile communication terminal according to an exemplary embodiment of the present invention. Referring to FIG. 3, the mobile communication terminal is in a waiting mode in step 300. When predetermined key input signals are input in the waiting mode, the controller 100 determines if the input key is a number key in step 305. As a result of the determination, when the input key is not the number key, the controller 100 controls a function corresponding to the input key to be performed in step 310. However, when the input key is the number key, the controller 100 determines if a communication key for performing communication is subsequently input after the number key is input, in step 315. As a result of the determination, when the communication key is not subsequently input, the controller 100 determines a number corresponding to the input number key as a general text, and displays the number on the display unit 110, in step 320. However, when the communication key is subsequently input, step 325 is performed.

In step 325, the controller 100 determines if a phone number exists employing the number of the input number key as a short key. As a result of the determination, when the phone number exists, the controller 100 originates a call to the corresponding phone number in step 330. However, when the phone number does not exist, the controller 100 originates a call to a phone number, which corresponds to an address previously set in the phone book, from among the phone numbers previously stored in the phone book, in step 335.

In the call origination method using the short key in the mobile communication terminal according to an exemplary embodiment of the present invention, when the user inputs the predetermined number key and the communication key, a determination is made as to whether a phone number having designated the number of the input number key as a short key exists. When the phone number exists, a call is originated to the phone number. However, when the phone number does not exist, a call is originated to a phone number stored in an address, which corresponds to the number, from among the phone numbers previously stored in the phone book.

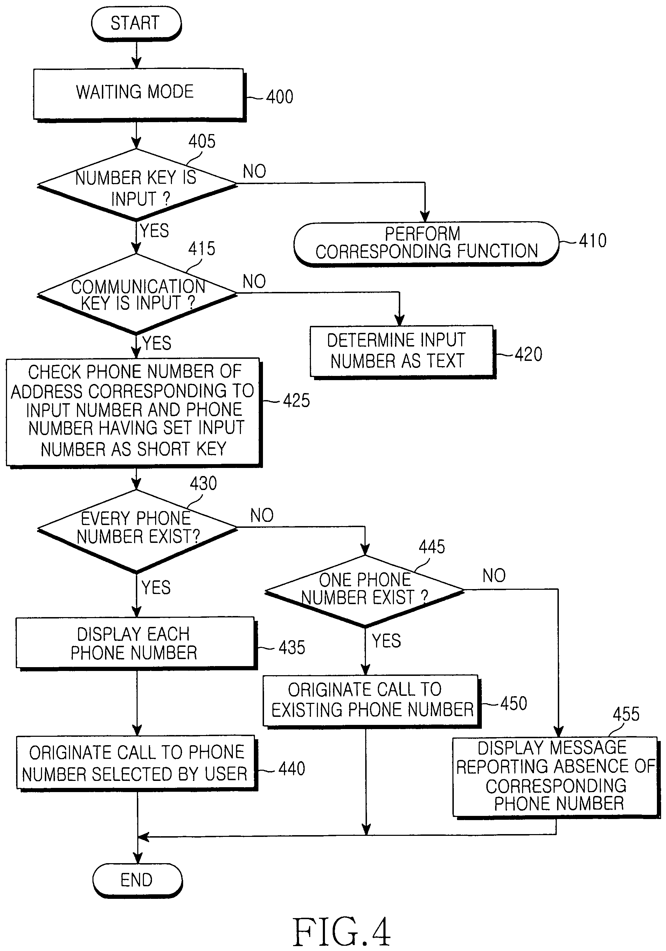

FIG. 4 is a flow diagram illustrating a call origination operation using a short key in the mobile communication terminal according to an exemplary embodiment of the present invention. Referring to FIG. 4, the mobile communication terminal is in a waiting mode in step 400. When predetermined key input signals are input in the waiting mode, the controller 100 determines if the input key is a number key in step 405. As a result of the determination, when the input key is not the number key, the controller 100 controls a function corresponding to the input key to be performed in step 410. However, when the input key is the number key, the controller 100 determines if a communication key for performing communication is subsequently input after the number key is input, in step 415. As a result of the determination, when the communication key is not subsequently input, the controller 100 determines a number corresponding to the input number key as a general text, and displays the number on the display unit 110, in step 420. However, when the communication key is subsequently input, step 425 is performed.

In step 425, the controller 100 checks a phone number of an address corresponding to the input number and a corresponding phone number having set the input number as a short key from the phone book. The address of the phone number stored in the phone book represents an order sequentially set in the phone book when a user inputs phone numbers. Further, the phone number having the input number set as the short key represents a phone number which corresponds to a number input by the user and belongs to the phone numbers previously stored in the phone book. In step 430, the controller 100 determines if the phone number having the corresponding number set as the short key and the phone number of the phone book, which has the corresponding number set as the address, exists. As a result of the determination, when all of the phone numbers exist, the controller 100 controls the phone numbers to be displayed on the display unit 110, in step 435. When one of the displayed phone numbers is selected by the user, the controller 100 originates a call to the selected phone number in step 440.

The controller 100 then determines if at least one of the phone numbers exists in step 445. As a result of the determination, when at least one of the phone numbers exists, the controller 100 originates a call to the existing phone number in step 450. However, when the phone numbers do not exist in step 445, the controller 100 controls a predetermined message to be displayed on the display unit 110 in step 455. The predetermined message reports that both the phone number of the address corresponding to the input number and the phone number having the number set as the short key do not exist.

In the call origination method using the short key in the mobile communication terminal according to an exemplary embodiment of the present invention, when the user inputs the predetermined number key and the communication key, the controller determines if a phone number including the number of the input number key designated as a short key and a phone number which is stored in an address corresponding to the number and belongs to the phone numbers previously stored in the phone book exists. When the phone numbers exist, the phone numbers are displayed and a call is originated to a phone number selected by the user. Further, when one of the phone numbers exists, a call is originated to the existing phone number. On the other hand, when the phone numbers do not exist, a message is displayed, which reports that a phone number set to correspond to the input number does not exist.

According to exemplary embodiments of the present invention as described above, when a user inputs a number key and subsequently inputs a communication key, phone numbers set to correspond to the input number key are displayed or a call is originated. However, when the user continuously inputs the number key for a preset time period, phone numbers set to correspond to the input number key are displayed or a call is originated. Further, according to exemplary embodiments of the present invention, short keys can be set for phone numbers stored in the internal memory of a terminal. However, in a terminal equipped with a SIM card for storing personal information such as a GSM terminal, phone numbers stored in the SIM card can be designated in a method similar to the setting of short keys of phone numbers stored in a phone book.

While the invention has been shown and described with reference to certain exemplary embodiments thereof, it will be understood by those skilled in the art that various changes in form and details may be made therein without departing from the scope of the claims.

## Claims

1. A call origination method using a short key in a mobile communication terminal, the method comprising:
determining, if a communication key for performing communication is subsequently input (315) after a number key is input (305), whether a phone number corresponding to the number key exists within a short key (325) database included in the mobile communication terminal, wherein said short key database is used for storing user-setup correspondences between number keys and phone numbers stored in a phone book within the mobile communication terminal;
originating a call to the phone number corresponding to the number key (330; 440) when the phone number exists in said short key database (325-YES; 430); and
originating, when the phone number does not exist in said short key database, a call to another phone number stored in an address of the phone book, said address corresponding to the number key (335; 450), wherein the address of the phone number stored in the phone book represents an order sequentially set in the phone book when the user inputs the phone numbers.

2. The method as claimed in claim 1, wherein the phone number or the another phone number of the phone book are stored in an internal memory of the terminal or the phone number or the another phone number are stored in an external memory including personal information of a user.

3. The method as claimed in claim 2, wherein the external memory is a SIM Card.

4. The method as claimed in claim 1, further comprising displaying information relating to the phone number, when the phone number exists in said short key database (230; 435).

5. A mobile communication terminal comprising means adapted to perform the method
steps of any of claims 1 to 4.

## Patentansprüche

1. Anrufveranlassungsverfahren unter Verwendung einer Kurzwahltaste in einem Mobilkommunikationsendgerät, wobei das Verfahren Folgendes umfasst:
Ermitteln, wenn eine Kommunikationstaste zum Durchführen von Kommunikation darauf folgend eingegeben wird (315), nachdem eine Zifferntaste eingegeben worden ist (305), ob eine Telefonnummer, die der Zifferntaste entspricht, innerhalb einer Kurzwahltastendatenbank vorhanden ist (325), die im Mobilkommunikationsendgerät beinhaltet ist, wobei die Kurzwahltastendatenbank zum Speichern benutzereingerichteter Entsprechungen zwischen Zifferntasten und Telefonnummern verwendet wird, die in einem Telefonbuch innerhalb des Mobilkommunikationsendgerätes gespeichert sind;
Veranlassen eines Anrufes zu der Telefonnummer, die der Zifferntaste entspricht (330; 440), wenn die Telefonnummer in der Kurzwahltastendatenbank vorhanden ist (325-YES; 430); und,
wenn die Telefonnummer nicht in der Kurzwahltastendatenbank vorhanden ist, Veranlassen eines Anrufes zu einer anderen Telefonnummer, die in einer Adresse des Telefonbuches gespeichert ist, wobei die Adresse der Zifferntaste entspricht (335; 450), wobei die Adresse der Telefonnummer, die im Telefonbuch gespeichert ist, eine Reihenfolge repräsentiert, die sequenziell im Telefonbuch gesetzt wird, wenn der Benutzer die Telefonnummern eingibt.

2. Verfahren nach Anspruch 1, wobei die Telefonnummer oder die andere Telefonnummer des Telefonbuches in einem internen Speicher des Endgerätes gespeichert sind oder die Telefonnummer oder die andere Telefonnummer in einem externen Speicher gespeichert sind, der persönliche Informationen eines Benutzers beinhaltet.

3. Verfahren nach Anspruch 2, wobei der externe Speicher eine SIM-Karte ist.

4. Verfahren nach Anspruch 1, das ferner Anzeigen von Informationen bezüglich der Telefonnummer umfasst, wenn die Telefonnummer in der Kurzwahltastendatenbank vorhanden ist (230; 435).

5. Mobilkommunikationsendgerät, das Mittel umfasst, die ausgelegt sind, die Verfahrensschritte nach irgendeinem der Ansprüche 1 bis 4 durchzuführen.

## Revendications

1. Procédé d'établissement d'appel en utilisant une touche de raccourci dans un terminal de communication mobile, le procédé comprenant :
la détermination, si une touche de communication pour effectuer une communication est entrée consécutivement (315) après qu'une touche numérique est entrée (305), qu'un numéro de téléphone correspondant à la touche numérique existe ou non à l'intérieur d'une base de données de touches de raccourci (325) incluse dans le terminal de communication mobile, dans lequel ladite base de données de touches de raccourci est utilisée pour mémoriser des correspondances configurées par un utilisateur entre des touches numériques et des numéros de téléphone mémorisés dans un annuaire téléphonique à l'intérieur du terminal de communication mobile ;
l'établissement d'un appel au numéro de téléphone correspondant à la touche numérique (330 ; 340) lorsque le numéro de téléphone existe dans ladite base de données de touches de raccourci (325-YES ; 430) ; et
l'établissement, lorsque le numéro de téléphone n'existe pas dans ladite base de données de touches de raccourci, d'un appel à un autre numéro de téléphone mémorisé dans une adresse de l'annuaire téléphonique, ladite adresse correspondant à la touche numérique (335 ; 450), dans lequel l'adresse du numéro de téléphone mémorisé dans l'annuaire téléphonique représente un ordre séquentiellement réglé dans l'annuaire téléphonique lorsque l'utilisateur saisit les numéros de téléphone.

2. Procédé selon la revendication 1, dans lequel le numéro de téléphone ou l'autre numéro de téléphone de l'annuaire téléphonique est mémorisé dans une mémoire interne du terminal, ou le numéro de téléphone ou l'autre numéro de téléphone est mémorisé dans une mémoire externe comprenant des informations personnelles d'un utilisateur.

3. Procédé selon la revendication 2, dans lequel la mémoire externe est une carte SIM.

4. Procédé selon la revendication 1, comprenant en outre l'affichage d'informations relatives au numéro de téléphone, lorsque le numéro de téléphone existe dans ladite base de données de touches de raccourci (230 ; 435) .

5. Terminal de communication mobile comprenant des moyens aptes à effectuer les étapes du procédé selon l'une quelconque des revendications 1 à 4.
